# EUROPEAN PATENT APPLICATION

(11) **EP 1 642 701 A1**
(43) Date of publication of application: **05.04.2006**
(21) Application number: 05020953.5
(22) Date of filing: 26.09.2005
(51) Int. Cl.: B29C 65/16

(54) **Laser weldable resin composition and composite article obtained from said composition**

(30) Priority: 01.10.2004 JP 2004290797; 04.04.2005 JP 2005107203; 12.09.2005 JP 2005263694
(71) Applicant: Daicel Polymer Ltd., Tokyo 108-8231 (JP)
(72) Inventor: Itakura, Masahiko Daicel Polymer, Ltd., Tokyo 108-8231 (JP); Ooe, Yuichi Daicel Polymer, Ltd., Sakai-shi Osaka 590-0905 (JP)
(74) Representative: Grünecker, Kinkeldey, Stockmair & Schwanhäusser Anwaltssozietät

(57) **Abstract**

In a method for improving bonding strength between a first resin article and a second resin article, the method comprises using a compatibilizer for both a first thermoplastic resin and a second thermoplastic resin, wherein the first resin article is formed from a first resin composition comprising a first thermoplastic resin, and the second resin article is formed from a second thermoplastic resin or a second resin composition comprising a second thermoplastic resin, and at least the first resin composition out of the first and the second resin compositions comprises the compatibilizer, wherein the first and the second resin articles are welded to each other by laser irradiation to form a composite article.

## Description

### TECHNICAL FIELD

The present invention relates to a laser weldable resin composition for uniting (or bonding or joining) with a resin article as a counterpart by welding with laser beam irradiation, and a composite article obtainable by the welding.

### BACKGROUND ART

As a method for bonding resin members together, there has been known a method of adhering resin members through an adhesive or an agglutinant. From the viewpoint of recycling efficiency, shortening of operation schedule, or others, a method of directly uniting (or bonding or joining) resin members by welding has attracted much attention. Among uniting manners with welding, a laser welding method with laser beam irradiation, compared with a thermal welding or an ultrasonic welding, particularly has advantages of being capable of uniting the resin members efficiently with less susceptibility to heat or vibration and less dependence on a shape of an object resin article.

On the other hand, in the case of bonding resin members by welding, a high compatibility between resins each constituting resin members to be united ensures efficient uniting of the resin members. However, in the case where compatibility between these resins is low, it is impossible to obtain enough bonding strength between these resin members. In addition to such compatibility, a resin member of the transmitted side is required to have a high transparency to a laser beam in the laser welding. From these points, a combination of resins to be united is limited.

Japanese Patent Application Laid-Open No. 18961/2002 (JP-2002-18961A) discloses a method for uniting a resin article, which comprises uniting a first resin member composed of a first resin material and a second resin member composed of a second resin material with the use of laser welding, wherein an alloy resin member composed of the first resin material and the second resin material is interposed between the first resin member and the second resin member, and at least a first interface between the first resin member and the alloy resin member and a second interface between the second resin member and the alloy resin member are allowed to melt with heating by laser beam irradiation. This method, however, has a disadvantage with respect to costs because some processing steps, e.g. , a step for producing an alloy film and a step for interposing the alloy film between the resin members are further required. Further, it is difficult to apply such a method for uniting these resin members each having a complicated shape.

It is therefore an object of the present invention to provide a resin composition from which a resin article is formed, and which is weldable to (or uniting with) a counterpart (other resin article) by laser beam irradiation; a combination of the resin composition and a resin composition constituting the counterpart; and a resin article formed from the resin composition.

Another object of the present invention is to provide a resin composition which is applicable to a wide range combination of resins and is capable of improving a bonding property (or welding property); a resin article and a combination of the resin composition and a resin composition constituting the counterpart; a method for improving bonding strength (or weld strength); and use of a compatibilizer for improving the bonding strength.

It is still another object of the present invention to provide a composite article which is formed by uniting (or welding) at a high bonding strength.

### DISCLOSURE OF THE INVENTION

The inventors of the present invention made intensive studies to achieve the above objects and finally found that, in the case where a compatibilizer is contained in at least one of resin articles to be united with each other, such a use of the compatibilizer is applicable to a wide range combination of resins, and these resin articles can be united (or welded) at a high bonding strength (or weld strength) by laser beam irradiation. The present invention was accomplished based on the above findings.

That is, the laser weldable resin composition of the present invention is a resin composition for a first resin article weldable (or bondable) to a second resin article by laser irradiation, which comprises a thermoplastic resin (a first thermoplastic resin) for the first resin article, and a compatibilizer for both the first thermoplastic resin and a thermoplastic resin (a second thermoplastic resin) for the second resin article. The first thermoplastic resin may comprise at least one member selected from the group consisting of a polyamide-series resin, a thermoplastic polyester-series resin, a polycarbonate-series resin, an olefinic resin, a styrenic resin, an acrylic resin, a vinyl-series resin, and a polyphenylene oxide-series resin, and may be the same series resin as the second thermoplastic resin, or different series resin from the second thermoplastic resin. The laser weldable resin composition may be a polymer alloy comprising a plurality of thermoplastic resins and the compatibilizer. The compatibilizer may comprise at least one member selected from the group consisting of an epoxy-modified (or epoxy group-containing) polymer (e.g., an epoxy-modified styrenic copolymer, and an epoxy-modified olefinic copolymer) and an acid-modified polymer (e.g., an acid-modified styrenic copolymer, and an acid-modified olefinic copolymer), or may comprise a styrenic block copolymer. In the resin composition, the proportion (weight ratio) of the first thermoplastic resin relative to the compatibilizer may be about 40/60 to 99/1.
In the resin composition, a combination of the first thermoplastic resin (I) and the compatibilizer (II) may be a combination of the following (a1), (a2), (b1), (b2), (c1), (c2), (d1) or (d2):
(a1) a combination of (I) at least one member selected from the group consisting of an olefinic resin, a styrenic resin and a polyphenylene oxide-series resin and (II) at least one member selected from the group consisting of an acid-modifiedpolymer and an epoxy-modified polymer, wherein the first resin article is weldable to the second resin article comprising a polyamide-series resin;
(a2) a combination of (I) a polyamide-series resin and (II) at least one member selected from the group consisting of an acid-modifiedpolymer and an epoxy-modified polymer, wherein the first resin article is weldable to the second resin article comprising at least one member selected from the group consisting of an olefinic resin, a styrenic resin and a polyphenylene oxide-series resin;
(b1) a combination of (I) at least one member selected from the group consisting of a polyester-series resin, a polycarbonate-series resin and a styrenic resin and (II) at least one member selected from the group consisting of a styrenic copolymer as a nonreactive compatibilizer, an acid-modified polymer and an epoxy-modified polymer, wherein the first resin article is weldable to the second resin article comprising an olefinic resin;
(b2) a combination of (I) an olefinic resin and (II) at least one member selected from the group consisting of a styrenic copolymer as a nonreactive compatibilizer, an acid-modified polymer and an epoxy-modified polymer, wherein the first resin article is weldable to the second resin article comprising at least one member selected from the group consisting of a polyester-series resin, a polycarbonate-series resin and a styrenic resin;
(c1) a combination of (I) at least one member selected from the group consisting of a polyester-series resin, a polycarbonate-series resin and a (meth)acrylic resin and (II) at least one member selected from the group consisting of an acid-modified polymer and an epoxy-modified polymer, wherein the first resin article is weldable to the second resin article comprising a styrenic resin;
(c2) a combination of (I) a styrenic resin and (II) at least one member selected from the group consisting of an acid-modified polymer and an epoxy-modified polymer, wherein the first resin article is weldable to the second resin article comprising at least one member selected from the group consisting of a polyester-series resin, a polycarbonate-series resin and a (meth)acrylic resin;
(d1) a combination of (I) at least one member selected from the group consisting of an olefinic resin and a polycarbonate-series resin and (II) an acid-modified polymer, wherein the first resin article is weldable to the second resin article comprising a cyclic olefinic resin; or
(d2) a combination of (I) a cyclic olefinic resin and (II) an acid-modified polymer, wherein the first resin article is weldable to the second resin article comprising at least one member selected from the group consisting of an olefinic resin and a polycarbonate-series resin.
Moreover, the first resin composition may comprise a plurality of thermoplastic resins and the compatibilizer. A combination of the plurality of thermoplastic resins (i), (ii) and the compatibilizer (iii) may be, for example, a combination of the following combination (a), (b), (c) or (d), the first resin article may be weldable to the second resin article comprising at least one member selected from the group consisting of the plurality of the thermoplastic resins (i) and (ii);
(a) a combination of (i) a polyamide-series resin, (ii) at least one member selected from the group consisting of an olefinic resin, a styrenic resin and a polyphenylene oxide-series resin, and (iii) at least one member selected from the group consisting of an acid-modified polymer and an epoxy-modified polymer;
(b) a combination of (i) an olefinic resin, (ii) at least one member selected from the group consisting of a polyester-series resin, a polycarbonate-series resin and a styrenic resin, and (iii) at least one member selected from the group consisting of a styrenic copolymer as a nonreactive compatibilizer, a acid-modified polymer and an epoxy-modified polymer;
(c) a combination of (i) a styrenic resin, (ii) at least one member selected from the group consisting of a polyester-series resin, a polycarbonate-series resin and a (meth) acrylic resin, and (iii) at least one member selected from the group consisting of an acid-modified polymer and an epoxy-modified polymer; or
(d) a combination of (i) a cyclic olefinic resin, (ii) at least one member selected from the group consisting of an olefinic resin and a polycarbonate-series resin, and (iii) an acid-modified polymer.
In the combination of (a), (b), (c) or (d), the proportion (weight ratio) of the resin (i) relative to the resin (ii) may be about 1/99 to 99/1, and the proportion (weight ratio) of the total amount of the resins (i) and (ii) relative to the compatibilizer (iii) maybe about 40/60 to 99/1.

The present invention includes a resin article formed from the laser weldable resin composition, and also includes a composite article in which the first resin article and the second resin article are welded to each other by laser irradiation.

Moreover, the present invention includes a combination of a first resin article and a second resin article weldable to the first resin article by laser irradiation, wherein the first resin article is formed from a first resin composition comprising a first thermoplastic resin, and the second resin article is formed from a second thermoplastic resin or a second resin composition comprising a second thermoplastic resin, and at least one composition out of the first and the second resin compositions (e.g. , at least the first resin composition) comprises a compatibilizer for both the first and the second thermoplastic resins (or a compatibilizer which compatibilizes the first and the second thermoplastic resins).

The present invention further includes a method for improving bonding strength (or weld strength) between the first resin article and the second resin article, which comprises using a compatibilizer for both the first thermoplastic resin and the second thermoplastic resin, wherein at least the one composition out of the first and the second resin compositions (e.g., at least the first resin composition) comprises the compatibilizer, wherein the first and the second resin articles are welded to each other by laser irradiation to form a composite article. In the improving method of the present invention, the bonding strength (or weld strength) between these resin articles is usually improved by using the laser weldable resin composition.

Furthermore, the present invention includes use of a compatibilizer for improving bonding strength (or weld strength) between the first resin article and the second resin article, wherein at least one composition out of the first and the second resin compositions (e.g., at least the first resin composition) comprises the compatibilizer for both the first and the second thermoplastic resins, wherein the first and the second resin articles are welded to each other by laser irradiation to form a composite article.

Incidentally, throughout this specification, the term "thermoplastic resin" sometimes means a thermoplastic resin composition.

### DETAILED DESCRIPTION OF THE INVENTION

### [Laser weldable resin composition]

The laser weldable resin composition of the present invention is a first resin composition for forming a first resin article weldable (or bondable) to a second resin article comprising a second thermoplastic resin by laser beam irradiation, wherein the first resin composition comprises a first thermoplastic resin for the first resin article, and a compatibilizer for both the first and the second thermoplastic resins. Incidentally, in the case where the second resin composition contains the compatibilizer, the second resin composition corresponds to a laser weldable resin composition of the present invention. The laser weldable resin composition may be used for a resin article which transmits a laser beam (hereinafter, sometimes simply referred to as a laser beam transmitting member or a transmitting member), or may be used for a resin article which absorbs a laser beam (hereinafter, sometimes simply referred to as a laser beam absorbing member or an absorbing member).

### (Thermoplastic resin)

The thermoplastic resin constituting the first resin article (or the second resin article) is not particularly limited to a specific one as long as the thermoplastic resin is capable of bonding (or attaching) to a resin article to be welded (or a counterpart) by laser welding, and various thermoplastic resins may be used.

The thermoplastic resin may include, for example, a polyamide-series resin (e.g., an aliphatic polyamide-series resin such as a polyamide 5, a polyamide 6, a polyamide 66, a polyamide 610, a polyamide 11, a polyamide 12, a polyamide 612, a polyamide 6/66, or a polyamide 6/11; an aromatic polyamide-series resin such as a polyamide 6T, a polyamide 9T, or a polyamide MXD; and an alicyclic polyamide-series resin), a thermoplastic polyester-series resin (e.g., a polyC₂₋₄alkylene terephthalate, a polyC₂₋₄alkylene naphthalate, copolyesters thereof, a polyarylate, and a liquid crystalline polyester), a polycarbonate-series resin (e.g., a bisphenol-based polycarbonate such as a bisphenol A-based polycarbonate, and a hydrogenated bisphenol-based polycarbonate), an olefinic resin (e.g., an olefinic homo- or copolymer (including an elastomer) such as a polyethylene (including a low-density polyethylene, a high-density polyethylene, and the like), a polypropylene, an ethylene-propylene copolymer, or an ethylene-propylene rubber, and a cyclic olefinic resin}, a styrenic resin [for example, a polystyrene (GPPS), a styrene-acrylic copolymer (e.g., a styrene-methyl methacrylate copolymer, a styrene-(meth)acrylic acid copolymer, and a styrene-acrylonitrile copolymer (such as an AS resin)), a styrene-diene or -olefinic copolymer (e.g., a styrene-butadiene-styrene (SBS) block copolymer, and a styrene-isoprene-styrene (SIS) block copolymer), and a rubber-containing styrenic resin (e.g., a high impact polystyrene (HIPS), an acrylonitrile-butadiene-styrene resin (an ABS resin), an AXS resin (e.g., an acrylonitrile-acrylic rubber-styrene resin(an AAS resin), and an acrylonitrile/ethylene-propylene rubber/styrene resin (an AES resin)), a methyl methacrylate-butadiene-styrene resin (an MBS resin), and a methyl methacrylate-styrene resin (an MS resin))], an acrylic resin (e.g., a poly(alkyl (meth) acrylate) such as a poly(methyl methacrylate), and a polyacrylonitrile), a vinyl-series resin (e.g., a vinyl chloride-series resin, a vinyl acetate-series resin, an ethylene-vinyl acetate copolymer, a polyvinyl alcohol, and an ethylene-vinyl alcohol copolymer), and a polyphenylene oxide-series resin [for example, a polyphenylene oxide, and a modified polyphenylene oxide (e.g., a blend with a polystyrene, and a polystyrene-grafted polyphenylene oxide)].

The thermoplastic resin constituting the resin article may be a crystalline resin or an amorphous (non-crystalline) resin.

Among the thermoplastic resins, the preferred resin includes a polyamide-series resin, a thermoplastic polyester-series resin, a polycarbonate-series resin, an olefinic resin, a styrenic resin, an acrylic resin, a vinyl-series resin, and a polyphenylene oxide-series resin [particularly, a polyamide-series resin (e.g., an aliphatic polyamide-series resin such as a polyamide 6), an olefinic resin (e.g., a homo- or copolymer of an olef in (chain olefin) such as a polypropylene or an ethylene-propylene copolymer, and a cyclic olefinic resin), and a styrenic resin (e.g. , a rubber-containing styrenic resin such as an ABS resin)] .

These thermoplastic resins may be used singly or in combination. In the case of using a plurality of the resins in combination, depending on the species of a resin constituting a counterpart(or an adherend),the combination of these resins may be a combination of the same or different series resins or may be a combination of the same or different resins as long as laser weldability or formability is not deteriorated. The laser weldable resin composition may form a polymer alloy of a plurality of the thermoplastic resins with the compatibilizer (a first compatibilizer) or a differently added compatibilizer (a second compatibilizer).

### (Compatibilizer)

The first or second compatibilizer contained in the first resin composition (or the second resin composition) or the polymer alloy may include a block copolymer or a graft copolymer having a unit (or chain or segment) in common with (or similar to or relevant to) the units (or chains or segments) of the resins each constituting the first and second resin compositions (or the polymer alloys), i.e., a nonreactive compatibilizer, and a polymer (e.g., a graft copolymer) containing a group having reactivity or high affinity (a reactive group) to at least one of these resins, i.e . , a reactive compatibilizer. The compatibilizers may be used singly or in combination.

The nonreactive compatibilizer (non-reactive type compatibilizer) may be suitably selected depending on the combination of resins each constituting the first and second resin compositions. For example, in the case where a combination of resins is a combination of a polyolefinic resin (e.g., a polyethylene-series resin, and a polypropylene-series resin) and a polystyrenic resin, examples of the nonreactive compatibilizer may include a styrenic copolymer, for example, a styrenic block copolymer such as a styrene-diene-based block copolymer [e.g., a styrene-butadiene block copolymer (an SB resin), a styrene-butadiene-styrene copolymer (an SBS resin), and a styrene-isoprene-styrene copolymer (an SIS resin)] and a hydrogenated product thereof [e.g., a hydrogenated (styrene-butadiene) block copolymer, a styrene-ethylene/propylene-styrene block copolymer (a SEPS resin),and a styrene-ethylene/butylene-styrene block copolymer]; and in addition, a styrenic graft copolymer in which a polystyrene is grafted to a polyolefin (such as a polyethylene or a polypropylene).

The reactive compatibilizer may include a polymer having an acid group (e.g., an acid anhydride group, and a carboxyl group) (an acid-modified polymer), an epoxy-modified polymer (or an epoxy-containing polymer), and an oxazoline group-containing polymer (e.g., an oxazoline group-containing polystyrene).

Examples of the acid-modified polymer may include a copolymer using an unsaturated carboxylic acid or an anhydride thereof (e.g., (meth)acrylic acid, maleic acid and maleic anhydride) as a copolymerizable component, for example, an acid-modified olefinic copolymer [e.g., an acid-modified (in particular, a maleic anhydride-modified) polyolefin (e.g., a graft copolymer in which maleic anhydride is grafted to a polyethylene or a polypropylene), and an acid-modified (in particular, a maleic anhydride-modified) polyolefinic elastomer (e.g. , a maleic anhydride-modified ethylene-propylene rubber)], an acid-modified styrenic copolymer {e.g. , an acid-modified polystyrene (e.g., a (meth)acrylic acid-modified polystyrene, and a styrene-maleic anhydride random copolymer), an acid-modified acrylonitrile/styrene copolymer (an acid-modified AS resin), an acid-modified acrylonitrile/butadiene/styrene copolymer (an acid-modified ABS resin) (e.g., a methacrylic acid-modified ABS resin), an acid-modified styrene/butadiene copolymer (e.g., a maleic anhydride-modified hydrogenated styrene/butadiene rubber), and an acid-modified polystyrenic elastomer [e.g., an acid-modified styrene/butadiene/styrene block copolymer (an acid-modified SBS), an acid-modified styrene/isoprene/styrene block copolymer (an acid-modified SIS), an acid-modified styrene/ethylene-butylene/styrene block copolymer (or an acid-modified hydrogenated styrene/butadiene/styrene block copolymer , an acid-modified SEBS), an acid-modified styrene/ethylene-propylene/styrene block copolymer (or an acid-modified hydrogenated styrene/isoprene/styrene block copolymer, an acid-modified SEPS), and an acid-modified hydrogenated SEBS]}. The proportion (modified proportion) of the unsaturated carboxylic acid component in the acid-modified polymer may be, for example, about 0.1 to 35% by weight, preferably about 0.2 to 25% by weight and more preferably about 0.5 to 20% by weight relative to the total polymer.

The epoxy-modified polymer may include a copolymer derived from a monomer having an epoxy group or a glycidyl group (for example, a glycidyl ester of an α,β-unsaturated carboxylic acid, such as glycidyl (meth) acrylate or glycidyl maleate) as a copolymerizable component [for example, an epoxy-modified olefinic copolymer such as an olefin-glycidyl (meth)acrylate-series copolymer (an ethylene-glycidyl methacrylate copolymer, an ethylene-methyl acrylate-glycidyl methacrylate copolymer, and a polypropylene-glycidyl methacrylate graft copolymer); and an epoxy-modified styrenic copolymer such asa styrene-glycidyl methacrylate copolymer],and a polymer having an epoxidized unsaturated group (e.g., an epoxy-modified styrenic copolymer such as an epoxidized product of a styrene-butadiene-styrene copolymer (an epoxidized SBS resin)). Incidentally, in the copolymer derived from an epoxy group- or glycidyl group-containing monomer as a copolymerizable component, the proportion of the epoxy group- or glycidyl group-containing monomer is not particularly limited to a specific one, and for example, may be about 0.1 to 25% by weight, preferably about 0.2 to 15% by weight, and more preferably about 0.5 to 10% by weight. Moreover, the percentage of epoxidation in the epoxidized polymer may be adjusted depending on the proportion of the unsaturated group or the degree of epoxidation in the polymer. The percentage of epoxidation in the total polymer may be, for example, about 0.1 to 30 mol%, preferably about 0.2 to 20 mol%, and more preferably about 0.5 to 10 mol%.

Incidentally, these compatibilizers may be used as a master batch containing a thermoplastic resin (for example, the thermoplastic resins mentioned above).

### (Combination of thermoplastic resin and compatibilizer)

The thermoplastic resin(s) and the compatibilizer(s) constituting the absorbing member and the transmitting member (and the thermoplastic resin(s) and the compatibilizer(s) constituting the polymer alloy) may be suitably selected from the above-mentioned thermoplastic resins and the above-mentioned compatibilizers in combination. The combination of the thermoplastic resins, and the combination of the thermoplastic resins and the compatibilizer may include the following examples (a), (b), (c), and (d).

(a) The combination of the thermoplastic resins is a combination of the following (i) and (ii), and the compatibilizer is at least one member selected from the group consisting of an acid-modified polymer (e.g., an acid-modified olefinic or styrenic copolymer) and an epoxy-modified polymer (e.g., an epoxy-modified styrenic or olefinic copolymer);
(i) at least one member selected from the group consisting of a polyamide-series resin (for example, an aliphatic polyamide-series resin such as a polyamide 5, a polyamide 6 or a polyamide 66, an aromatic polyamide-series resin; and a blend of the polyamide-series resin(s) with other resin(s) (e.g., a blend with a styrenic resin such as an ABS resin, a blend with an olefinic resin such as a polypropylene)), and
(ii) at least one member selected from the group consisting of an olefinic resin, a styrenic resin and a polyphenylene oxide-series resin.

Incidentally, in the resin (ii), examples of the olefinic resin may include an olefinic polymer (e.g., a homo- or copolymer of an olefinic monomer, such as a polyethylene, a polypropylene, or an ethylene-propylene copolymer; and an olefin-(meth)acrylate-series copolymer such as an ethylene-ethyl acrylate copolymer, or an ethylene-methyl acrylate copolymer); and a blend of the olefinic polymer with a styrenic resin (e.g., a rubber-containing styrenic resin such as an ABS resin) and/or a polyamide-series resin (e.g., an aliphatic polyamide-series resin, and an aromatic polyamide-series resin). Moreover, the styrenic resin in the resin (ii) may include a polystyrene, an ABS resin [including a blend of an ABS resin with an AXS resin such as an acrylonitrile/ethylene-propylene rubber/styrene resin(an AES resin)], an SBS resin; in addition, a blend of the styrenic resin (s) with other resin (s) [for example, an olefinic resin (e.g. , the olefinicpolymer), a polyester- series resin (e.g., a polyC₂₋₄alkylene terephthalate such as a polybutylene terephthalate (PBT), or a copolyester having a C₂₋₄alkylene terephthalate unit), a polyamide-series resin (e.g., an aliphatic polyamide), and/or a blend with a polycarbonate-series resin or others)]. Among the resins (ii), the polyphenylene oxide-series resin may include a polyphenylene oxide, a modified polyphenylene oxide (e.g., a polyphenylene oxide in which a polystyrene is blended or grafted), and others.

Among the above-mentioned combinations of the resins and the compatibilizer, the following combination (a-1) or (a-2) is preferred:
(a-1) the combination of the thermoplastic resins is a combination of (i) the polyamide-series resin and (ii) the olefinic resin, and the compatibilizer is the acid-modified olefinic copolymer (e.g., a maleic anhydride-modified polyolefin, and a maleic anhydride-modified olefinic elastomer),
(a-2) the combination of the thermoplastic resins is a combination of (i) the polyamide-series resin and (ii) at least one member selected from the group consisting of the styrenic resin and the polyphenylene oxide-series resin, and the compatibilizer is at least one member selected from the group consisting of the acid-modified styrenic copolymer (e.g., a modified polystyrene, and an acid-modified ABS resin) and the acid-modified olefinic copolymer (e.g., an acid-modified polyolefin).

(b) The combination of the thermoplastic resins is a combination of the following (i) and (ii), and the compatibilizer is at least one member selected from the group consisting of the nonreactive compatibilizer (e.g., a styrenic copolymer such as a styrenic block copolymer or a styrenic graft copolymer), the acid-modified polymer and the epoxy-modified polymer;
(i) the olefinic resin (e.g., an olefinic resin exemplified in the paragraph (s) of the above-mentioned (a)), and
(ii) at least one member selected from the group consisting of the polyester-series resin (e.g., a polyC₂₋₄alkylene terephthalate such as a PBT, or a copolyester having a C₂₋₄alkylene terephthalate unit), the polycarbonate-series resin (e.g., a polycarbonate-series resin mentioned above) and the styrenic resin (e.g., a styrenic resin exemplified in the paragraph of the above-mentioned (a)).
Among the above-mentioned combinations, the following combination (b-1) or (b-2) is preferred:
(b-1) the combination of the thermoplastic resins is a combination of (i) the olefinic resin and (ii) the styrenic resin; and the compatibilizer is a styrenic block polymer, for example, at least one member selected from the group consisting of an SBS resin, an epoxidized SBS resin, an SIS resin, and an SPS resin,
(b-2) the combination of the thermoplastic resins is a combination of (i) the olefinic resin and (ii) at least one member selected from the group consisting of the polyester-series resin and the polycarbonate-series resin; and the compatibilizer is the epoxy-modified olefinic copolymer (a copolymer exemplified in the paragraph of the above-mentioned (a-1)).

(c) The combination of the thermoplastic resins is a combination of the following (i) and (ii), and the compatibilizer is at least one member selected from the group consisting of an acid-modified polymer and an epoxy-modified polymer;
(i) a styrenic resin (e.g., a styrenic resin exemplified in the paragraph of the above-mentioned (a)), and
(ii) at least one member selected from the group consisting of a polyester-series resin (e.g., a polyC₂₋₄alkylene terephthalate such as a PBT, or a copolyester having a C₂₋₄alkylene terephthalate unit), a polycarbonate-series resin (a polycarbonate-series resin mentioned above) and a (meth) acrylic resin (e.g., an alkyl ester of (meth)acrylic acid, such as a poly(methyl methacrylate)).
Preferably, (c-1) the combination of the thermoplastic resins is a combination of (i) the styrenic resin and (ii) at least one member selected from the group consisting of the polyester-series resin and the polycarbonate-series resin; and the compatibilizer is at least one member selected from the group consisting of the epoxy-modified styrenic copolymer and the epoxy-modified olefinic copolymer (a copolymer exemplified above).

(d) The combination of the thermoplastic resins is a combination of the following (i) and (ii), and the compatibilizer is an acid-modified polymer (e.g., an acid-modified olefinic copolymer, and an acid-modified styrenic copolymer):
(i) a cyclic olefinic resin [for example, a cyclic olefinic resin alone; and a blend of a cyclic olefinic resin with other resin (e.g., a blend of a cyclic olefinic resin with a polycarbonate resin, and a blend of a cyclic olefinic resin with a polyamide-series resin (e.g., an aliphatic polyamide-series resin such as a polyamide 6))], and
(ii) at least one member selected from the group consisting of an olefinic resin (in particular, a cyclic olefinic resin) and a polycarbonate resin.

Incidentally, in the combination (d), the cyclic olefinic resin may include, for example, a homo- or copolymer of a cyclic olefin, and a copolymer of a cyclic olefin and a copolymerizable monomer. Examples of the cyclic olefin may include a monocyclic olefin such as a C₄₋₁₀cycloalkene or a C₄₋₁₀cycloalkadiene (e.g., cyclopentadiene); a bicyclic olefin {e.g., a C₄₋₂₀bicycloalkene [e.g., a norbornene compound (e.g., norbornene (such as 2-norbornene), methylnorbornene, and 5-methyl-5-methoxycarbonyl-2-norbornene)], and a C₄₋₂₀bicycloalkadiene [e.g., anorbornadiene compound (e.g., 2,5-norbornadiene)]}, and a polycyclic olefin such as a tricyclic to polycyclic olefin (e.g., a tricyclic to hexacyclic olefin (e.g. , a tetracyclic to hexacyclic olefin) such as a C₆₋₂₅tricycloalkadiene [e.g., a dicyclopentadiene compound (e.g., dicyclopentadiene)], and a C₈₋₃₀tetracycloalkene [e.g., a tetracyclododecene (e.g., tetracyclo[4.4.0.1^{2,5}.1^{7,10}]-3-dodecene)]}. The cyclic olefins may be used singly or in combination to form the cyclic olefinic resin.

Moreover, the copolymerizable monomer is not particularly limited to a specific one as far as the monomer is capable of copolymerizing. Examples of the copolymerizable monomer may include a chain olefin [for example, an alkene (e.g., a C₂₋₂₀alkene such as ethylene, propylene or 1-butene), and an alkadiene (e.g., an unconjugated C₅₋₂₀alkadiene such as 1,4-hexadiene)], a (meth)acrylic monomer (e.g., a (meth)acrylic acid ester such as methyl (meth)acrylate, (meth)acrylic acid, and (meth)acrylonitrile),and an unsaturated dicarboxylic acid or a derivative thereof (e.g., maleic anhydride). The copolymerizable monomers may be used singly or in combination.

The typical cyclic olefinic resin may include a homo- or copolymer of the cyclic olefin (e.g., a polycyclic olefin such as a norbornene compound, a dicyclopentadiene compound, or a tetracyclododecene compound), a copolymer of the cyclic olefin and a copolymerizable monomer [for example, a copolymer of a cyclic olefin and a chain α-C₂₋₆olefin (in particular ethylene), such as an ethylene-norbornene copolymer], and others. Incidentally, in the copolymer of the cyclic olefin and the copolymerizable monomer, the proportion of the cyclic olefin (e.g., a norbornene compound) may be not less than 30% by weight (e.g., about 35 to 99.5% by weight) and preferably not less than 40% by weight (e.g. , about 45 to 99% by weight) relative to the total amount of the monomer.

Incidentally, the cyclic olefinic resin may be a hydrogenated resin. Moreover, the cyclic olefinic resin may be prepared by a conventional polymerization method (e.g., an addition polymerization, and a ring-opening metathesis polymerization), or may use commercial items. For example, the cyclic olefinic resin is available from Zeon Corporation as a brand name "ZEONEX", from JSR Corporation as a brand name "ARTON" , from Mitsui Chemicals, Inc. as a brand name "APEL", from Polyplastics CO., Ltd. as a brand name "TOPAS", and others.

Incidentally, in the blend, the proportion (weight ratio) of the cyclic olefinic resin relative to other resin [the former/the latter] may be about 99/1 to 10/90, preferably about 95/5 to 15/85 (e. g. , about 90/10 to 20/80) , and more preferably about 85/15 to 25/75 (e.g., about 80/20 to 30/70).

Among the above-mentioned combinations (d) of the resins and the compatibilizer, the following combination (d-1) or (d-2) is preferred:
(d-1) the combination of the thermoplastic resins is a combination of (i) the cyclic olefinic resin (e.g., a blend of a cyclic olefinic resin with a polycarbonate resin) and (ii) the cyclic olefinic resin; and the compatibilizer is the acid-modified olefinic copolymer (e.g., an acid-modified polyolefinic elastomer),

(d-2) the combination of the thermoplastic resins is a combination of (i) the cyclic olefinic resin (e.g., a blend of a cyclic olefinic resin with a polycarbonate resin) and (ii) the cyclic olefinic resin; and the compatibilizer is the acid-modified styrenic copolymer (e.g., an acid-modified polystyrenic elastomer).

Incidentally, in the combination of the thermoplastic resins constituting the transmitting member and the absorbing member, and the compatibilizer, the compatibilizer may be contained in at least one of the thermoplastic resins (or resin compositions) constituting the transmitting member and the absorbing member, or may be contained in both of the thermoplastic resins.
Moreover, the thermoplastic resins (compositions) constituting each member (the transmitting member and/or the absorbing member) may comprise a plurality of thermoplastic resins and a compatibilizer. Such a embodiment also includes the above-mentioned polymer alloy. As a combination of a plurality of thermoplastic resins and the compatibilizer in such a resin composition, the above-mentioned combination of the resins (i), (ii) and the compatibilizer may be utilized. In the case where one member comprises a plurality of thermoplastic resins and a compatibilizer, the other member may comprise at least one resin out of the plurality of thermoplastic resins, or may comprise at least one resin out of the plurality of thermoplastic resins (e.g., either the resin (i) or (ii)) and the compatibilizer.
In the case where the thermoplastic resins (compositions) constituting each member comprise a plurality of thermoplastic resins and a compatibilizer, the proportions of the plurality of thermoplastic resins may be suitably selected. For example, in the case of using the resins (i) and (ii) in combination, the proportion (weight ratio) of the resin (i) relative to the resin (ii) may be selected from the range of about 1/99 to 99/1, preferably about 5/95 to 95/5, and more preferably about 10/90 to 90/10 (e.g., about 20/80 to 80/20).
Regarding the compatibilizer contained in each member (the transmitting member and/or the absorbing member) or the thermoplastic resin (composition) constituting each member, the proportion (weight ratio) of the thermoplastic resin constituting each member (in the case of using a plurality of thermoplastic resins, the total amount of these thermoplastic resins) relative to the compatibilizer may be about 40/60 to 99/1, preferably about 50/50 to 95/5, and more preferably about 60/40 to 90/10.
The present invention includes a combination of the thermoplastic resins (or compositions thereof) each constituting the transmitting member and the absorbing member, that is, a combination of the thermoplastic resins (or compositions thereof) in which a first resin article comprising a first thermoplastic resin (or a composition thereof) is bondable to a second resin article comprising a second thermoplastic resin (or a composition thereof) by laser irradiation, wherein, among the first thermoplastic resin (the composition thereof) and the second thermoplastic resin (the composition thereof), at least one member of the first and the second thermoplastic resins (or the compositions thereof), for example, at least the second thermoplastic resin, contains the compatibilizer for both the first and the second thermoplastic resins. Further, the present invention includes use of a compatibilizer for improving a bonding property of resin articles, which comprises allowing at least one of the first and the second thermoplastic resins (or the compositions thereof) (e.g., at least the second thermoplastic resin) to contain the compatibilizer for both of the thermoplastic resin constituting the first resin article and the thermoplastic resin constituting the second resin article.

Moreover, the thermoplastic resin composition of the present invention may form either the transmitting member or the absorbing member. For example, in the combination of the thermoplastic resins mentioned above, the resin (i) may be used as the transmitting member or the absorbing member, and the resin (ii) may be used as the counterpart. Incidentally, in the case of forming the transmitting member, it is necessary that the transmitting member has certain degree of transmittancy (or permeability) to a laser beam in order to unite the transmitting member with the counterpart (the absorbing member) efficiently by laser beam irradiation. In the above-mentioned combinations of the thermoplastic resins, therefore, it is sufficient that the transmitting member is formed from a resin (or a resin composition) having a higher transmittancy to a laser beam, and that the absorbing member is formed from a thermoplastic resin (or resin composition) having a lower transmittancy thereto.

The resin to be used for the transmitting member is, for example, a polyamide-series resin (e.g., an aliphatic polyamide-series resin), anolefinicresin (e.g., a homo- or copolymer of an olefinic monomer, such as a polypropylene), a styrenic resin (e.g., a polystyrene, and a rubber-containingstyrenic resin)in many cases,depending on the species of the resin [for example, the species or proportion of the copolymerizable component (e.g., an aromatic component, and a rubber component)], crystallinity, and others. Incidentally, in the case of using a resin having a relatively low transmittancy to a laser beam (e. g. , a polybutylene terephthalate-series resin) for forming the transmitting member, the bonding property of the resin can be ensured by using such a resin as a polymer blend or a polymer alloy in combination with other resin in order to suitably adjust the content of such a resin. Incidentally, the transmittance of the resin composition constituting the transmitting member to a laser beam (the transmittance as the transmitting member) may be, depending on an oscillation wavelength of a laser beam to be used (e.g., a wavelength in the range of 740 to 1600 nm), for example, not less than 15% (e.g., about 15 to 100%), and usually about 20 to 100%, preferably about 30 to 100%, and more preferably about 40 to 100%.

The thermoplastic resin composition of the present invention may further contain a coloring agent, if necessary. In particular, to a thermoplastic resin composition constituting the absorbing member, is often added a coloring agent and/or a laser beam absorbent, and the like. Moreover, in the case of containing the coloring agent in the transmitting member, the coloring agent may be used as far as transmission of a laser beam is not inhibited.

As the laser beam absorbent, for example, a black pigment such as a carbon black (e.g., an acetylene black, a lampblack, a thermal black, a furnace black, a channel black, and Ketjen black), a titanium black, or black iron oxide, is used in many cases. These laser beam absorbents can be used singly or in combination. The resin composition may contain the laser beam absorbent as the coloring agent. Incidentally, the average particle size of the black pigment may be, for example, selected from the wide range of about 10 nm to 3 µm (preferably about 10 nm to 1 µm) . The average particle size of the carbon black may be, for example, about 10 to 100 nm, and preferably about 15 to 90 nm. The proportion of the laser beam absorbent may be about 0.1 to 10 parts by weight, preferably about 0.3 to 5 parts by weight, and more preferably about 0.5 to 3 parts by weight, relative to 100 parts by weight of the resin constituting the counterpart to be united (or bonded).

Examples of the coloring agent may include a variety of inorganic or organic colorants for coloring the resin, e.g., a white colorant (e.g., a white titanium pigment), a yellow colorant (e.g., an inorganic pigment such as a cadmium yellow, an organic pigment such as a benzidine yellow), and an orange colorant (e.g., a hansa yellow), a red pigment (e.g., an inorganic pigment such as a reddish pigment, and an organic pigment such as a lake red), a blue pigment (e.g. , an inorganic pigment such as a cobalt blue, and an organic pigment such as a copper phthalocyanine blue), and a green pigment (e.g., an inorganic pigment such as a chrome green, and an organic pigment such as a copper phthalocyanine green). As the coloring agent, the above-mentioned colorant may be used singly, or a plurality of coloring agents may be used in combination for adjusting the color tone of the resin to a desired one. The resin may be also colored to black by a subtractive color process, e.g., by using three primary colors. The proportion of the coloring agent is not particularly limited to a specific one, and for example, may be about 0 to 10 parts by weight (e.g., about 0.001 to 10 parts by weight) and preferably about 0.01 to 5 parts by weight relative to 100 parts by weight of the resin.

The first and second thermoplastic resin compositions may contain, if necessary, other additives, for example, a flame retardant, a filler (e.g., a glass fiber, a carbon fiber, and a metal filler), a stabilizer (e.g., an antioxidant), a lubricant, a dispersing agent, a foaming agent, and an antibacterial agent.

### [Resin article]

The resin articles (the transmitting member, and the absorbing member), which are united with (or bonded to) each other by laser beam irradiation to give a composite article, may be obtained by mixing (e.g., melt-mixing) the thermoplastic resin constituting the resin article (or the composition, e.g., the thermoplastic resin composition of the present invention, and the resin composition not containing a compatibilizer but containing the thermoplastic resin and if necessary the coloring agent and/or the additive (s)) or a constitutive component thereof (e.g., the thermoplastic resin, the coloring agent, and the additive) with a conventional mixing method using an extruder, a kneader, a mixer, a roller or the like, and molding thus obtained resin composition with a conventional molding method, e.g., an extrusion molding, an injection molding, a compression molding, and a blow molding.

The shape of the resin article is not particularly limited to a specific one as far as at least one part of the article has an enough contact surface (e.g., a flat surface) to bond to the counterpart. The shape may be a two-dimensional (e.g., a plate-like) shape or a three-dimensional shape.

The thickness of the resin article (the thickness of at least the transmitting member in the position to be laser-welded) may be, depending on the application, and transmittancy to the laser beam or absorbability, for example, about 50 µm to 10 mm, preferably about 70 µm to 8 mm, and more preferably about 100 µm to 5 mm.

### [Composite article]

In the composite article of the present invention, the first resin article which is formed from the thermoplastic resin composition of the present invention, and the second resin article which comprises the second thermoplastic resin and may contain a compatibilizer are welded (or united) with each other by laser irradiation.

The composite article may be obtained by at least bringing a surface to be bonded of an object (e.g., the transmitting member) into contact with a surface to be bonded of a counterpart (e.g., the absorbing member), partly melting the interface between the object and the counterpart to weld the bonded surfaces with laser irradiation, and cooling these members to bond to (or unite with) each other.

As the light source of the laser beam to be used for welding, a source of a laser beam having an oscillation wavelength of about 193 to 1600 nm may be usually adopted. For example, a solid state laser (e.g., Nd:YAG excitation, and semiconductor laser excitation), a semiconductor laser (650 to 980 nm), a tunable diode laser (630 to 1550 nm), a titanium-sapphire laser (Nd:YAG excitation, 690 to 1000 nm), or others, is used in many cases.

According to the present invention, in the joining of the first resin article comprising the first thermoplastic resin composition and the second resin article comprising the second thermoplastic resin composition by laser irradiation, the bonding property (bonding strength) between the both resin articles can be improved by allowing at least any one of the first thermoplastic resin composition and the second thermoplastic resin composition (e.g., at least the second thermoplastic resin composition) to contain the compatibilizer for both the thermoplastic resin constituting the first article and the thermoplastic resin constituting the second article.

According to the present invention, since the laser weldable resin composition comprises the thermoplastic resin and the compatibilizer, a resin article comprising the resin composition is firmly bondable (or weldable) to a counterpart by laser beam irradiation, and in addition, a composite article wherein the resin article and the counterpart are united with each other at a high bonding strength can be obtained. Moreover, since the compatibilizer is allowed to be contained in a thermoplastic resin composition constituting at least one of resin articles to be bonded (or welded) to each other, the present invention is applicable for the wide range of the resin combinations (that is, the resin composition suitable for laser welding can comprise the wide range of the resin combinations), the bonding property (the bonding strength) can be greatly improved.

### INDUSTRIAL APPLICABILITY

The thermoplastic resin composition, the resin article and the composite article of the present invention are useful for home or office automation (OA) instruments, for example, an instrument such as a computer, a word processor, a printer, a copying machine, a facsimile, a telephone equipment, or a mobile device (e.g. , a cell phone, and a personal digital assistance (PDA)), and a component (e.g., a housing, a case, a cover, a door, and a cartridge (such as an ink cartridge or a toner cartridge)) of a home electric appliance (e.g., a television, a video cassette recorder, a DVD (digital versatile disc) player, an air conditioner, a refrigerator, and a washing machine), and in addition, a member for an automobile, a domestic household article, and a building material.

### EXAMPLES

The following examples are intended to describe this invention in further detail and should by no means be interpreted as defining the scope of the invention.

### Examples 1 to 10 and Comparative Examples 1 to 3

### (1) Preparation of resin article

A resin article (a stepped plate (90 mm in length and 50 mm in width) including three stages having thicknesses of 1, 2 and 3 mm, respectively) (a laser beam transmitting member) was formed by using a resin composition having a formulation described in the column of Transmitting Member of Table 1. Further, a laser beam absorbing member, which had the same size and shape as the resin article, was formed by using a resin composition having a formulation described in the column of Absorbing Member of Table 1 and 0.5% by weight of a carbon black relative to the total composition.

### (2) Laser welding

The laser beam transmitting member was placed on the black-colored laser beam absorbing member obtained by the above step (1), and then on the transmitting member, a transparent glass plate was put as a weight. The both members were welded by using a 120W laser-welding machine (semiconductor laser, wavelength: 940 nm) manufactured by Fine Device Co., Ltd. (welding conditions: outputs shown in Table 1, and a scanning rate of 10 mm/second).
Incidentally, the absorbing plate and the transmitting plate were overlapped, and the laser beam was irradiated on the position that both the thickness of the transmitting member and that of the absorbing member were 2 mm, respectively.

### [ (3) Evaluation

Whether these members were united (or bonded) after laser beam irradiation or not was evaluated, and the breaking force was measured.

### (i) Laser weldability

The laser weldability was judged based on the following criteria.

"A": Two members were united (or welded).

"B": Two members were not united (or welded).

(ii) Weld strength test (Evaluation of breaking force)
Each of the absorbing member and the transmitting member was pulled from the bonded part as the center toward the outside by using a tensile tester (manufactured by Orientec CO., Ltd., Tension UCT-1T) under the conditions of a distance between chucks of 80 mm and a head speed of 5.0 mm/minute, and the breaking force was measured.

The results are shown in Table 1.

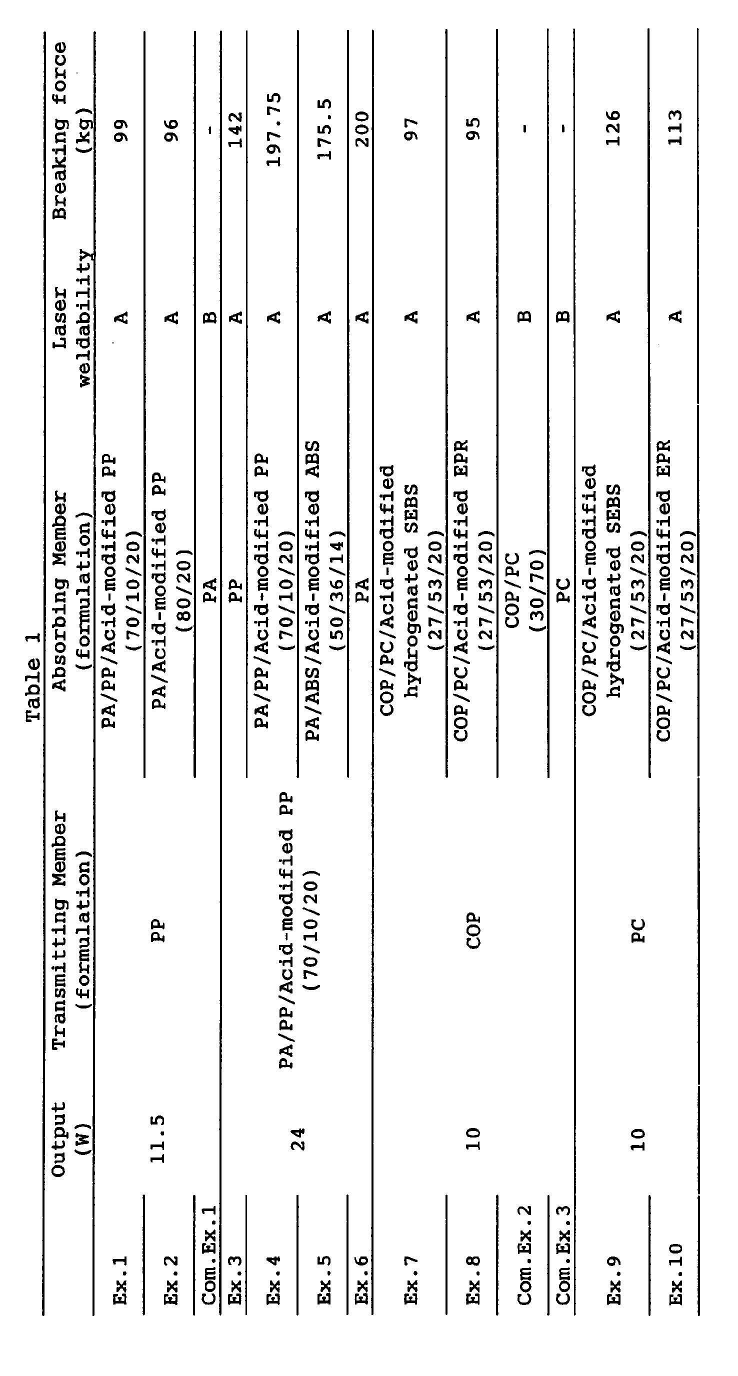

Apparent from the Table, in Comparative Examples, wherein neither article had any compatibilizer, the both articles were not bonded (or welded) to each other, or even in the case of bonding, the breaking force was low and the bonding strength was extremely small. On the contrary, regarding Examples, in each of which the compatibilizer was contained in at least any one of the articles, the two articles were effectively bonded to each other, and the breaking force was high. Further, in the case where a polypropylene (PP) was used as the transmitting member, there are only two cases in which these two articles can be bonded were only two examples, i.e., one was Example 1 in which PA/PP/acid-modified PP was used as the absorbing member, and the other was Example 2 in which PA/acid-modified PP was used as the absorbing member. On the other hand, in the case of using ABS/PP/compatibilizer as the transmitting member (Examples 3 to 6), the transmitting member was effectively bonded to many varieties of absorbing members and the bonding strength (that is, the breaking force) was high.

Incidentally, the thermoplastic resins and compatibilizers used in Examples and Comparative Examples are shown as follows.

(1) PP: Polypropylene homopolymer ("SUNALLOMER PM900M", manufactured by Sunallomer Ltd.)
(2) ABS: Acrylonitrile-butadiene-styrene copolymer (ABS resin) ("Cevian-V500SF", manufactured by Daicel Polymer Ltd.)
(3) PA: Nylon 6 ("UBE Nylon 1015B", manufactured by Ube Industries, Ltd.)
(4) PA/ABS/acid-modified ABS (50/36/14):
A polymer alloy containing the PA (3), the ABS (2), and an acid-modified ABS in the above-mentionedweight ratio, wherein the acid-modified ABS was obtained in accordance with a method for preparing a graft copolymer (A-1) described in Reference Example 1 of Japanese Patent Application Laid-Open No.182369/1988(JP-63-182369A). Incidentally, the contents of monomer components in the acid-modified ABS were 42% by weight of styrene, 16% by weight of acrylonitrile, 40% by weight of rubber, and 3% by weight of methacrylic acid.

### (5) PA/PP/acid-modified PP (70/10/20):

A polymer alloy containing the PA (3) and a block copolymer in the above-mentioned weight ratio, wherein the block copolymer comprised an acid (maleic anhydride)-modified PP (a compatibilizer, manufactured by Atofina Chemicals, Inc., "OREVAC CA100", content of maleic anhydride: 1% by weight), and the PP (1).

### (6) PA/acid-modified PP (80/20):

A polymer alloy containing the PA (3) and an acid (maleic anhydride)-modified PP (a compatibilizer, manufactured by Atofina Chemicals, Inc., "OREVAC CA100", content of maleic anhydride: 1% by weight) in the above-mentioned weight ratio.

(7) COP: Cyclic olefin resin ("ZEONEX E48R", manufactured by Zeon Corporation)
(8) PC: Polycarbonate resin ("S2000", manufactured by Mitsubishi Engineering-Plastics Corporation)
(9) COP/PC (30/70):
A polymer alloy containing the COP (7) and the PC (8) in the above-mentioned weight ratio (10) COP/PC/acid-modified hydrogenated SEBS (27/53/20):
A polymer alloy containing the COP (7), the PC (8), and an acid (maleic anhydride)-modified hydrogenated SEBS (a compatibilizer, manufactured by Asahi Kasei Corporation, "Tuftec M1913") in the above-mentioned weight ratio

### (11) COP/PC/acid-modified EPR (27/53/20):

A polymer alloy containing the COP (7), the PC (8), and an acid (maleic anhydride)-modified ethylene-propylene rubber(a compatibilizer,manufactured by Mitsui Chemicals, Inc., "TAFMER MH7010") in the above-mentioned weight ratio

## Claims

1. A laser weldable resin composition for a first resin article weldable to a second resin article by laser irradiation, which comprises a first thermoplastic resin for the first resin article, and a compatibilizer for both the first thermoplastic resin and a second thermoplastic resin for the second resin article.

2. A resin composition according to claim 1, wherein the first thermoplastic resin comprises at least one member selected from the group consisting of a polyamide-series resin, a thermoplastic polyester-series resin, a polycarbonate-series resin, an olefinic resin, a styrenic resin, an acrylic resin, a vinyl-series resin, and a polyphenylene oxide-series resin, and is the same series resin as the second thermoplastic resin, or different series resin from the second thermoplastic resin.

3. A resin composition according to claim 1, which is a polymer alloy comprising a plurality of thermoplastic resins and the compatibilizer.

4. A resin composition according to claim 1, wherein the compatibilizer comprises at least one member selected from the group consisting of an epoxy-modified polymer and an acid-modified polymer.

5. A resin composition according to claim 1, wherein the compatibilizer comprises at least one member selected from the group consisting of an acid-modified styrenic copolymer, an acid-modified olefinic copolymer, an epoxy-modified styrenic copolymer, an epoxy-modified olefinic copolymer and a styrenic block copolymer.

6. A resin composition according to claim 1, wherein the proportion (weight ratio) of the first thermoplastic resin relative to the compatibilizer is 40/60 to 99/1.

7. A resin composition according to claim 1, wherein a combination of the first thermoplastic resin (I) and the compatibilizer (II) is a combination of the following (a1), (a2), (b1), (b2), (c1), (c2), (d1) or (d2):
(a1) a combination of (I) at least one member selected from the group consisting of an olefinic resin, a styrenic resin and a polyphenylene oxide-series resin and (II) at least one member selected from the group consisting of an acid-modified polymer and an epoxy-modified polymer, wherein the first resin article is weldable to the second resin article comprising a polyamide-series resin;
(a2) a combination of (I) a polyamide-series resin and (II) at least one member selected from the group consisting of an acid-modified polymer and an epoxy-modified polymer, wherein the first resin article is weldable to the second resin article comprising at least one member selected from the group consisting of an olefinic resin, a styrenic resin and a polyphenylene oxide-series resin;
(b1) a combination of (I) at least one member selected from the group consisting of a polyester-series resin, a polycarbonate-series resin and a styrenic resin and (II) at least one member selected from the group consisting of a styrenic copolymer as a nonreactive compatibilizer, an acid-modified polymer and an epoxy-modified polymer, wherein the first resin article is weldable to the second resin article comprising an olefinic resin;
(b2) a combination of (I) an olefinic resin and (II) at least one member selected from the group consisting of a styrenic copolymer as a nonreactive compatibilizer, an acid-modified polymer and an epoxy-modified polymer, wherein the first resin article is weldable to the second resin article comprising at least one member selected from the group consisting of a polyester-series resin, a polycarbonate-series resin and a styrenic resin;
(c1) a combination of (I) at least one member selected from the group consisting of a polyester-series resin, a polycarbonate-series resin and a (meth)acrylic resin and (II) at least one member selected from the group consisting of an acid-modified polymer and an epoxy-modified polymer, wherein the first resin article is weldable to the second resin article comprising a styrenic resin;
(c2) a combination of (I) a styrenic resin and (II) at least one member selected from the group consisting of an acid-modified polymer and an epoxy-modified polymer, wherein the first resin article is weldable to the second resin article comprising at least one member selected from the group consisting of a polyester-series resin, a polycarbonate-series resin and a (meth)acrylic resin;
(d1) a combination of (I) at least one member selected from the group consisting of an olefinic resin and a polycarbonate-series resin and (II) an acid-modified polymer, wherein the first resin article is weldable to the second resin article comprising a cyclic olefinic resin; or
(d2) a combination of (I) a cyclic olefinic resin and (II) an acid-modified polymer, wherein the first resin article is weldable to the second resin article comprising at least one member selected from the group consisting of an olefinic resin and a polycarbonate-series resin.

8. A resin composition according to claim 1, which comprises a plurality of thermoplastic resins and the compatibilizer, a combination of said plurality of thermoplastic resins (i), (ii) and the compatibilizer (iii) is a combination of the following combination (a), (b), (c) or (d):
(a) a combination of (i) a polyamide-series resin, (ii) at least one member selected from the group consisting of an olefinic resin, a styrenic resin and a polyphenylene oxide-series resin, and (iii) at least one member selected from the group consisting of an acid-modified polymer and an epoxy-modified polymer;
(b) a combination of (i) an olefinic resin, (ii) at least one member selected from the group consisting of a polyester-series resin, a polycarbonate-series resin and a styrenic resin, and (iii) at least one member selected from the group consisting of a styrenic copolymer as a nonreactive compatibilizer, a acid-modified polymer and an epoxy-modified polymer;
(c) a combination of (i) a styrenic resin, (ii) at least one member selected from the group consisting of a polyester-series resin, a polycarbonate-series resin and a (meth) acrylic resin, and (iii) at least one member selected from the group consisting of an acid-modified polymer and an epoxy-modified polymer; or
(d) a combination of (i) a cyclic olefinic resin, (ii) at least one member selected from the group consisting of an olefinic resin and a polycarbonate-series resin, and (iii) an acid-modified polymer;
wherein the first resin article is weldable to the second resin article comprising at least one member selected from the group consisting of said plurality of the thermoplastic resins (i) and (ii).

9. A resin composition according to claim 8, wherein, in the combination of (a), (b), (c) or (d), the proportion (weight ratio) of the resin (i) relative to the resin (ii) is 1/99 to 99/1, and the proportion (weight ratio) of the total amount of the resins (i) and (ii) relative to the compatibilizer (iii) is 40/60 to 99/1.

10. A combination of a first resin article and a second resin article weldable to the first resin article by laser irradiation, wherein the first resin article is formed from a first resin composition comprising a first thermoplastic resin, and the second resin article is formed from a second thermoplastic resin or a second resin composition comprising a second thermoplastic resin, and
at least the first resin composition out of the first and the second resin compositions comprises a compatibilizer for both the first and the second thermoplastic resins.

11. A resin article formed from a laser weldable resin composition recited in claim 1.

12. A composite article in which a first resin article formed from a laser weldable resin composition recited in claim 1 and a second resin article comprising a thermoplastic resin are welded to each other by laser irradiation.

13. A method for improving bonding strength between a first resin article and a second resin article, which comprises using a compatibilizer for both a first thermoplastic resin and a second thermoplastic resin, wherein the first resin article is formed from a first resin composition comprising a first thermoplastic resin, and the second resin article is formed from a second thermoplastic resin or a second resin composition comprising a second thermoplastic resin, and at least the first resin composition out of the first and the second resin compositions comprises the compatibilizer,
wherein the first and the second resin articles are welded to each other by laser irradiation to form a composite article.

14. Use of a compatibilizer for improving bonding strength between a first resin article and a second resin article, wherein the first resin article is formed from a first resin composition comprising a first thermoplastic resin, and the second resin article is formed from a second thermoplastic resin or a second resin composition comprising a second thermoplastic resin, and at least the first resin composition out of the first and the second resin compositions comprises the compatibilizer for both the first and the second thermoplastic resins,
wherein the first and the second resin articles are welded to each other by laser irradiation to form a composite article.
